# FASCICULE DE BREVET EUROPEEN

(11) **EP 3 155 304 B1**
(45) Date de publication et mention de la délivrance du brevet: **17.08.2022**
(21) Numéro de dépôt: 15733830.2
(22) Date de dépôt: 15.06.2015
(51) Int. Cl.: F16L 11/08

(54) **CONDUITE TUBULAIRE A BANDE DE MAINTIEN COMPOSITE**
ROHRLEITUNG MIT VERBUNDHALTESTREIFEN
TUBULAR CONDUIT WITH A COMPOSITE HOLDING STRIP

(30) Priorité: 16.06.2014 FR 1455486
(43) Date de publication de la demande: 19.04.2017
(73) Titulaire: TECHNIP N-POWER, 92400 Courbevoie (FR)
(72) Inventeur: DEMANZE, Frédéric, F-76490 Caudebec-en-Caux (FR)
(74) Mandataire: Fédit-Loriot
(86) Numéro de dépôt international: PCT/FR2015/051572
(87) Numéro de publication internationale: WO 2015/193595

(56) Documents cités:
- WO-A1-03/044414
- WO-A1-2012/149937
- FR-A1- 2 739 673
- FR-A1- 2 776 358
- FR-A1- 2 835 584

## Description

La présente invention se rapporte à une conduite tubulaire flexible destinée au transport des hydrocarbures.

Un domaine d'application envisagé est notamment, mais non exclusivement, celui du transport des hydrocarbures en milieu marin entre un fond marin et une surface en surplomb.

Les conduites tubulaires flexibles dites « non liées », décrites dans les documents normatifs API 17J, « Specification for Unbonded Flexible Pipe », API RP 17B, « Recommended Practice for Flexible Pipe », API 17J, «Spécification for Unbonded Flexible Pipe », API 16C, « Choke and Kill Systems », et API 7K, « Rotary Drilling Hose » publiés par l' « American Petroleum Institute », comprennent plusieurs couches superposées en matériaux métalliques et en matériaux plastiques, leur conférant leurs propriétés mécaniques et leurs propriétés d'étanchéité vis-à-vis de l'hydrocarbure qu'elles transportent et du milieu environnant.

Aussi, elles comprennent généralement, de l'intérieur vers l'extérieur, une carcasse métallique faite d'un feuillard en spirale agrafé, une gaine de pression en matériau polymère, un enroulement hélicoïdal à pas court d'un fil métallique formant une voûte de pression, au moins une nappe d'armures de traction réalisée par l'enroulement à pas long d'une pluralités de fils métalliques autour de ladite voûte de pression, et une gaine de protection externe.

Lorsque les conduites sont soumises à de fortes pressions hydrostatiques, et en particulier en mer profonde, dès lors que la pression interne de la conduite diminue trop fortement, précisément en dessous de la pression hydrostatique, elles sont soumises à « l'effet de fond inverse ». La conduite subit alors des efforts de compression axiale tendant à la faire se raccourcir. Lorsqu'à cela s'ajoute, dans un environnement dynamique et turbulent, des contraintes transversales sur la conduite, les fils d'armure des nappes d'armure de traction tendent alors à flamber latéralement et à venir désorganiser localement de manière irréversible la conduite. Ces fils d'armure forment alors localement des structures dites « en cage d'oiseau ».

Afin d'y pallier, on enroule en hélice à pas court une bande de maintien sur la nappe de fils d'armure de traction la plus externe. Ces bandes de maintien ou de renfort sont réalisées en fibres organiques, par exemple en aramide et elles viennent alors contenir les effets de gonflement et de flambage radial des fils des nappes d'armure de traction. De plus, il a été imaginé de revêtir la bande de maintien d'un matériau polymère pour pouvoir augmenter sa durée de vie. Le matériau polymère est alors solidaire de la bande de maintien et ne forme qu'un avec elle. On pourra se référer au document WO2008/135 663 lequel décrit une telle bande de maintien. Cependant, la bande ainsi revêtue n'est pas préservée de la dégradation en toute circonstance d'exploitation, et notamment en condition de mer ultra-profonde.

Il a également été imaginé de mettre en oeuvre des fils d'acier pour réaliser les bandes de maintien. Cependant, cela alourdit considérablement les conduites. Document WO2012/149937 divulgue un tuyau similaire.

Aussi, un problème qui se pose et que vise à résoudre la présente invention, est de fournir une conduite tubulaire flexible encore plus résistante à l'effet de fond inverse, que les conduites selon l'art antérieur.

Dans le but de résoudre ce problème, la présente invention propose une conduite tubulaire flexible destinée au transport des hydrocarbures comprenant, d'une part une structure tubulaire interne de pression comportant une gaine tubulaire étanche et une voûte de pression réalisée autour de ladite gaine tubulaire étanche pour reprendre les efforts radiaux, et d'autre part une structure tubulaire externe de traction comportant au moins une nappe de fils d'armure de traction en appui sur ladite voûte de pression, et au moins une bande de maintien enroulée en hélice à pas court sur ladite nappe de fils d'armure de traction pour pouvoir maintenir radialement lesdits fils d'armure de traction contre ladite voûte de pression, ladite bande de maintien comportant une couche en matériau polymère et une pluralité de mèches de fibres étendues sensiblement selon la direction longitudinale de ladite bande de maintien. Les fibres des mèches de ladite pluralité de mèches de fibres sont des fibres minérales, et ladite pluralité de mèches de fibres est noyée à l'intérieur de ladite couche en matériau polymère.

Le domaine des fibres peut être divisé en quatre grande catégories, à savoir les fibres naturelles (fibres de coton, de lin, de laine, de soie...), les fibres artificielles (fibres de viscose), les fibres synthétiques (fibres de polyamides, de polyesters, de polyoléfines, d'acryliques...) et les fibres de spécialités, c'est-à-dire les fibres organiques et les fibres inorganiques.

Par « fibres minérales inorganiques », on entend l'ensemble des fibres qui n'entrent dans aucune des trois premières catégories, uniquement dans la quatrième catégorie, en prenant soin d'exclure les fibres organiques. Les fibres minérales inorganiques regroupent entre autres, les fibres de verre, de basalte, de céramiques et de carbone.

Ainsi, une caractéristique de l'invention réside dans la mise en œuvre des mèches de fibre, lesquelles sont entièrement noyées dans l'épaisseur de la couche en matériau polymère. De la sorte, la bande de maintien est réalisée dans un matériau composite incluant non plus des fibres organiques de type aramide par exemple mais des fibres minérales inorganiques. Ces fibres minérales présentent l'avantage d'être bien plus résistantes à l'hydrolyse que ne le sont les fibres organiques, et au surplus, elles permettent de conférer aux bandes de maintien des hauts modules d'élasticité, par exemple supérieur à 100 GPa. De surcroît, les fibres minérales présentent le double avantage d'être légères et moins sensibles au phénomène de corrosion que les fibres métalliques.

Selon un mode de mise en œuvre de l'invention particulièrement avantageux, lesdites fibres minérales sont des fibres de basalte. Ces dernières présentent des propriétés mécaniques ainsi qu'une inertie par rapport au phénomène d'hydrolyse, supérieures à celles des fibres de verre et elles sont aussi moins coûteuses que les fibres de carbone. Au surplus, elles présentent des qualités de surface avantageuses permettant un bon mouillage du matériau polymère lors de la fabrication de la bande de maintien. Selon un autre mode de mise en œuvre, les fibres minérales sont des fibres de bore ou encore des fibres de carbone. Les fibres de bore sont moins coûteuses que les fibres de carbone et elles présentent, tout comme les fibres de basalte, une bonne résistance à l'hydrolyse.

Selon encore un autre mode de mise en œuvre de l'invention particulièrement avantageux, les mèches de ladite pluralité de mèches de fibres sont toronnées. De la sorte, la résistance mécanique des mèches de fibres est accrue. Selon un autre mode de mise en œuvre préféré, les mèches de ladite pluralité de mèches de fibres sont tressées.

En outre, selon un mode de réalisation de l'invention avantageux, les mèches de fibres de ladite pluralité de mèches de fibres sont réparties uniformément à l'intérieur de ladite couche en matériau polymère. De la sorte, les mèches de fibres confèrent une résistance mécanique relativement homogène à la bande de maintien, dans la masse de la couche de matériau polymère.

Selon un autre mode de réalisation de l'invention, préféré, ladite couche en matériau polymère présentant une épaisseur et une surface médiane divisant ladite couche en matériau polymère suivant l'épaisseur en deux parties identiques, et les mèches de fibres de ladite pluralité de mèches de fibres s'étendent à l'intérieur de l'une desdites deux parties. De la sorte, la possibilité de déformation de l'autre des deux parties est rendue plus aisée par rapport à ladite une desdites deux parties incluant la pluralité de mèches de fibre, et partant, l'application de la bande de maintien sera rendue plus aisée autour de la nappe de fils d'armure de traction. On expliquera plus en détail dans la suite de la description le mode de déformation de la bande de maintien lorsqu'elle est enroulée autour de la nappe de fils d'armure de traction.

De plus, selon un mode de mise en œuvre de l'invention particulièrement avantageux, les mèches de fibres de ladite pluralité de mèches de fibres sont encapsulées dans un autre matériau polymère. Ainsi, on limite les risques de rupture transversale de la bande de maintien. Également, la cohésion avec le matériau polymère de la couche de maintien, la résistance à l'usure et à l'abrasion ainsi qu'à la compression des fibres, sont améliorées.

Selon une variante de réalisation de l'invention, ledit autre matériau polymère encapsulant les fibres, est un matériau thermoplastique. De la sorte, l'encapsulation des mèches de fibres est aisée à mettre en œuvre à partir d'un matériau thermoplastique à l'état fondu, et en refroidissant les mèches de fibres enduites du matériau fondu.

Selon une autre variante de réalisation, ledit autre matériau polymère encapsulant les fibres est un matériau thermodurcissable. De la sorte, les mèches de fibres ainsi encapsulées sont encore mieux préservées du phénomène de corrosion pouvant résulter du transport de fluides d'hydrocarbures au sein de la conduite de l'invention.

S'agissant du matériau polymère de ladite une couche en matériau polymère, il est avantageusement thermoplastique. Par exemple, il est choisi parmi la famille des polyoléfines, des polyamides, des Polyéthercetone (PEK), des Polyétheréthercetone (PEEK), des Polyaryléthercétone (PEAK), des Polyamide-imide (PAI), des Polyether imide (PEI), des Poly(ether sulfones) (PES), des Polyimide (PI), Polyphenylsulfone (PPS), des Polyéthersulfone (PES), des Polysulfone (PSU), des Polyvinylsurchlore (PVC)c, des Polyphenyleneoxyde (PPO), des polyimideméthacrylique (PMI), etc...

De la sorte, sa mise en œuvre est également rendue plus aisée. Selon un autre mode de mise en œuvre, ledit matériau polymère de ladite une couche en matériau polymère est préférentiellement thermodurcissable, par exemple choisi parmi les systèmes à base de durcisseur aromatique ou cycloaliphatique. Ainsi, on accroît la résistance mécanique des mèches de fibres ainsi encapsulées.

Selon une autre variante de réalisation de l'invention, la bande de maintien est renforcée par un tissu ou film mince. Ledit film mince comporte des fibres longitudinales de verre, de carbone ou d'aramide de manière à former un tissu, un non-tissé ou un mat, et il est disposé sur au moins une des faces supérieure ou inférieure de la bande de maintien de l'invention par collage. De la sorte, la résistance mécanique aux sollicitations transverses de la bande de maintien est améliorée.

On se reportera au document WO1999049259 aux fins d'illustrer cette variante de réalisation.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en perspective et en écorché d'une conduite tubulaire flexible conforme à l'invention;
- la Figure 2 est une vue schématique en coupe droite d'un élément de détail de la Figure 1 selon une première variante de réalisation ;
- les Figures 3A, 3B et 3C illustrent schématiquement en coupe droite l'élément de détail représenté sur la Figure 2 selon trois modes de mise en œuvre différents d'une deuxième variante de réalisation ; et,
- les Figures 4A et 4B illustrent schématiquement en coupe droite l'élément de détail représenté sur la Figure 2 selon deux modes de mise en œuvre différents d'une troisième variante de réalisation.

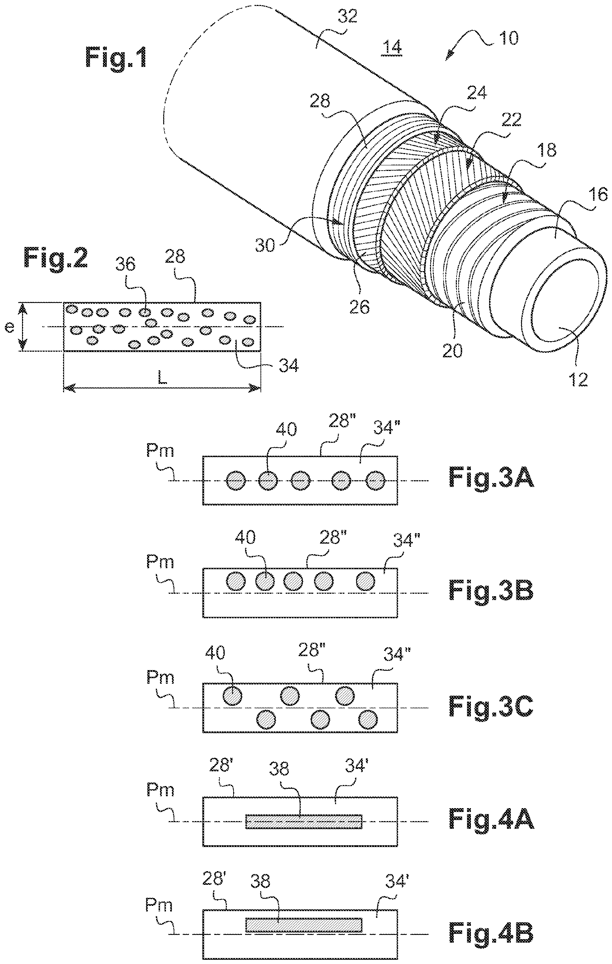

La Figure 1 illustre partiellement en écorché une conduite tubulaire flexible 10, et fait apparaître les différentes couches superposées qui la forment. Celles-ci sont successivement réalisées les unes sur les autres, de l'intérieur 12 de la conduite vers l'extérieur 14. L'intérieur 12 forme un espace d'écoulement interne de l'hydrocarbure.

La couche la plus interne est une gaine de pression 16 réalisée dans un matériau polymère par extrusion à chaud. Le matériau polymère mis en œuvre est avantageusement, un matériau thermoplastique semi-cristallin. Cette gaine de pression 16 est étanche et suffisamment épaisse pour pouvoir résister à l'écoulement d'un hydrocarbure sous pression et éventuellement chaud.

Ensuite, la gaine de pression 16 est recouverte d'une voûte de pression 18 faite d'un fil métallique de section sensiblement rectangulaire, enroulé en spirale à pas court en formant des spires 20 jointives. Les spires 20 viennent s'appliquer radialement contre la gaine de pression 16. La voûte de pression 18 permet ainsi de reprendre les efforts externes exercés radialement par la pression hydrostatique sur la conduite tubulaire flexible en milieu marin ainsi que les efforts internes radiaux exercés par la circulation du fluide d'hydrocarbures au sein de l'espace d'écoulement interne.

La voûte de pression 18 est recouverte de deux nappes 22, 24 d'une pluralité de fils d'armure enroulés à pas long et dans deux sens opposés l'un de l'autre de manière croisée. Les armures de ces nappes 22, 24 sont dites, armures de traction, car elles permettent de reprendre les efforts longitudinaux de traction qui s'exercent sur la conduite aussi bien lors de son installation sur le site, qu'en exploitation. La nappe de fils d'armure la plus externe 24 définit une surface d'appui cylindrique 26 sensiblement circulaire.

Selon une variante de réalisation, pour des applications haute pression ou grandes profondeurs, la voûte de pression 18 est recouverte d'au moins deux paires de nappes d'armure de traction.

Sur la surface d'appui cylindrique 26 de la nappe de fils d'armure 24 est enroulée en hélice à pas court une bande de maintien ou de renfort 28. Elle est enroulée avec une forte tension autour de la nappe de fils d'armure 24 en formant des spires jointives, de manière à obtenir une couche de maintien 30 sensiblement homogène. Une caractéristique de l'invention réside dans la structure et la constitution de la bande de maintien 28, laquelle comprend une couche en matériau polymère et des fibres minérales. On en décrira différentes variantes dans la suite de la description.

En outre, une gaine d'étanchéité externe 32 extrudée dans un matériau polymère thermoplastique, vient recouvrir la couche de maintien 30.

La zone située entre la gaine de pression 16 et la gaine d'étanchéité externe 32 et comprenant la voûte de pression 18, les armures de tractions 22, 24 et la bande de maintien 28, définit un espace annulaire de la conduite tubulaire flexible 10.

En enroulant la bande de maintien 28 de sorte que ses bords se touchent, soit selon un enroulement à spires jointives, ou se chevauchent, soit selon un enroulement à recouvrement de spires, l'espace annulaire de la conduite tubulaire flexible 10 devient confiné, favorisant alors la condensation de l'eau et/ou limitant la perméation des gaz contenus dans le fluide d'hydrocarbures circulant au sein de l'espace d'écoulement interne, vers l'extérieur. L'environnement de l'espace annulaire auquel sont soumises les couches 18, 22 et 24 est dans ce cas plus sévère, c'est-à-dire que des conditions très favorables à l'initiation du phénomène de corrosion des couches métalliques sont réunies. Aussi, pour réduire le phénomène de corrosion, on prévoit la présence de trous dans l'épaisseur de la bande 28. Partant, on optimise la diffusion des gaz vers l'extérieur de l'espace annulaire de la conduite tubulaire flexible.

On se référera à la Figure 2 illustrant en coupe droite la bande de maintien 28 illustrée sur la Figure 1 et selon une première variante de réalisation. En section droite, elle présente une forme générale parallélépipédique rectangle et elle est constituée d'une matrice en matériau polymère 34 à l'intérieur de laquelle sont noyées des mèches de fibres minérales 36 qui s'y étendent longitudinalement.

Les mèches de fibres minérales 36 sont de préférence des mèches de fibre de basalte, dont le module d'élasticité est de l'ordre de 50 GPa, et dont la résistance à la traction est de l'ordre de 1000 MPa. Ces valeurs sont supérieures à celles que l'on peut obtenir avec des fibres de verre par exemple. La bande de renfort ou de maintien comprenant les fibres minérales 36 mises en œuvre, présente une épaisseur comprise par exemple entre 0,05 mm et 5 mm et une largeur comprise entre 45 mm et 500 mm. Les fibres minérales utilisées sont du type fibres unidirectionnelles, et elles sont étendues longitudinalement dans la direction de la bande de maintien 28, noyées à l'intérieur du matériau polymère 34 thermoplastique ou bien thermodurcissable. Les mèches de fibres sont uniformément dispersées dans la matrice du matériau polymère 34. S'agissant du matériau thermodurcissable, la mise en œuvre de résine époxy présente des avantages en termes de vieillissement. La bande de maintien 28 ainsi obtenue présente un rapport largeur L sur épaisseur e, compris par exemple entre 50 et 100.

Ainsi, la bande de maintien 28 peut présenter une résistance à la traction comprise par exemple entre 1000 MPa et 3000 MPa.

En outre, pour améliorer la résistance mécanique selon la direction transversale de la bande de maintien 28, on remplace les fibres unidirectionnelles par un matériau tissé bidimensionnel ou multiaxial où encore, par un mat.

Selon une seconde variante illustrée sur les Figures 4A et 4B déclinée en deux modes de mise en œuvre différents, les mèches de fibre minérale sont regroupées ensemble, tandis que la section droite de la bande de maintien est sensiblement parallélépipédique rectangle également. Les éléments analogues à ceux de la Figure 2 présentent les mêmes références affectées d'un signe prime : « ' ». Les nouvelles références sont dans la suite de la série des références déjà affectées. Ainsi on retrouve la bande de maintien 28' en section droite. Elle définit un plan médian Pm la divisant en deux parties images l'une de l'autre par rapport à ce plan Pm dans le sens de l'épaisseur. Les mèches de fibres minérales sont alors façonnées en un élément de renfort 38 possédant une géométrie sensiblement rectangulaire, lequel élément de renfort s'étend longitudinalement à l'intérieur de la matrice en matériau polymère 34' et au centre de la matrice suivant le plan médian Pm. Selon la section droite, la largeur de l'élément de renfort 38 est par exemple comprise entre 50 % et 75 % de la largeur totale de la matrice en matériau polymère 34', tandis que son épaisseur est comprise entre 20 % et 40 % de l'épaisseur totale de la matrice en matériau polymère 34'. Aussi, tel que représenté sur la Figure 4A, l'élément de renfort 38 de mèches de fibres minérales, est centré à la fois latéralement et dans l'épaisseur de la matrice en matériau polymère 34'. De la sorte, les propriétés mécaniques de la bande de maintien 28 en résultant sont sensiblement homogènes.

Selon un autre mode de mise en œuvre de l'invention, représenté sur la Figure 4B, l'élément de renfort 38 de mèches de fibre minérale, est toujours centré latéralement à l'intérieur de la matrice en matériau polymère 34'. Mais en revanche, il s'étend dans la partie supérieure délimitée par le plan médian Pm. Partant, les propriétés mécaniques de la bande de maintien 28 ainsi obtenues ne sont plus homogènes. De la sorte, on vient par exemple appliquer la bande de maintien 28 contre la surface d'appui cylindrique 26 de la nappe de fils d'armure 24 de manière à ce que ladite partie supérieure vienne précisément en contact avec la surface d'appui cylindrique 26. De la sorte, la bande de maintien 28 étant enroulée autour de la surface d'appui cylindrique 26, ladite partie supérieure de la bande de maintien 28 tend à être comprimée axialement tandis que la partie inférieure tend à être étirée longitudinalement. En réalité, la partie supérieure demeure très peu déformable grâce au mat 38 de mèches de fibre, tandis que la partie inférieure constituée quasi exclusivement de matériau polymère, tend à s'étirer. De la sorte, c'est bien la partie la moins déformable qui est au plus proche de la nappe de fils d'armure 24. Partant, les armures de cette nappe sont maintenues fortement serrées radialement vers le centre de la conduite tubulaire 10. Les risques de déformation locale de la conduite en « cage d'oiseau » sont ainsi sensiblement nuls.

Le matériau polymère choisi pour la réalisation de l'élément de renfort 38 est choisi parmi les matériaux polymères thermoplastiques ou thermodurcissables.

Selon une troisième variante illustrée sur les Figures 3A, 3B et 3C relatives à trois modes de réalisation, les mèches de fibres minérales, sont elles-mêmes encapsulées dans un matériau polymère. Sur ces Figures 3A, 3B et 3C, les éléments analogues à ceux de la Figure 2 présentent les mêmes références affectées d'un signe double prime : « " ».

Ainsi on retrouve sur les Figures 3A à 3C la bande de maintien 28" en section droite. Elle définit un plan médian Pm la divisant en deux parties images l'une de l'autre par rapport à ce plan Pm dans le sens de l'épaisseur. Les mèches de fibres minérales sont, selon cette troisième variante de réalisation, façonnées en jonc 40 de diamètre compris par exemple entre 0,1 mm et 5 mm. Les joncs s'étendent alors longitudinalement à l'intérieur de la matrice en matériau polymère 34" et au centre de la matrice suivant le plan médian Pm en étant régulièrement espacés les uns des autres. Les trous précités visant à réduire le phénomène de corrosion, sont prévus dans l'épaisseur de la bande 28, entre les mèches de fibres minérales 36, entre les joncs 40 ou encore autour de l'élément de renfort 38.

Les joncs 40, sont constitués de mèches de fibre de basalte noyées dans une autre matrice propre d'un matériau polymère. Ils présentent une section circulaire ou bien rectangulaire. Les mèches de fibre de basalte peuvent être tressées ou bien toronnées, de façon à améliorer leur résistance mécanique en traction. Et les joncs 40 peuvent alors être obtenus par pultrusion, en entraînant les mèches de fibres à travers une filière. Le matériau polymère de ladite autre matrice, mis en œuvre pour réaliser les joncs 40, est par exemple un matériau thermoplastique. De préférence, le matériau polymère est un matériau thermodurcissable permettant d'améliorer la tenue et la résistance des joncs 40. Les joncs sont ensuite eux-mêmes noyés dans la matrice en matériau polymère 34", laquelle est elle-même thermoplastique ou de préférence thermodurcissable.

Selon cette troisième variante de réalisation, la résistance à l'usure et à l'abrasion des fibres minérales, est accrue. Au surplus, elles résistent mieux à la compression. De surcroît, grâce à une telle mise en œuvre des mèches de fibre, la bande de maintien 28" alors obtenue présente une meilleure résistance à la rupture selon une direction transversale.

Selon le mode de mise en œuvre illustré sur la Figure 3A, où les joncs 40 s'étendent à l'intérieur de la matrice en polymère 34" suivant le plan médian Pm, on observera que les mèches de fibres subissent très peu de contrainte axiale lorsque la bande de maintien 28" est enroulée contre la nappe de fils d'armure 24. En revanche, l'épaisseur de matériau polymère de la matrice 34" située vers l'intérieur de la courbure de la bande de maintien 28" tend à se contracter axialement tandis que l'épaisseur située vers l'extérieur de la courbure est étirée axialement.

Un tel mode de mise en œuvre peut convenir à des diamètres de conduite moyens, entre les gros diamètres et les petits diamètres, car la bande de maintien 28" peut subir une courbure significative sans affecter les mèches de fibres minérales.

S'agissant du mode de mise en œuvre de la bande de maintien 28" illustrée sur la Figure 3B, où les joncs 40 s'étendent à l'intérieur de la matrice en polymère 34" exclusivement dans l'une des parties délimitée par le plan médian Pm, elle peut être plus adaptée aux petits diamètres de conduite. Dans ce cas, la bande de maintien 28" est enroulée autour de la nappe de fils d'armure 24 de manière à ce que les joncs 40 soient situés vers l'intérieur de la courbure. De la sorte, l'épaisseur de matériau polymère de la matrice 34" dépourvue de renfort et située vers l'extérieur tend à s'étirer.

Quant au mode de mise en œuvre de la bande de maintien 28" illustré sur la Figure 3C, où les joncs 40 sont uniformément répartis de part et d'autre du plan médian Pm, sa résistance en flexion est plus importante. Partant, elle est destinée aux conduites de plus gros diamètres.

On observera que les possibilités de flexion des bandes de maintien 28" sont également très directement liées à la nature des matériaux polymère utilisés pour la matrice 34". De manière générale, les matériaux polymère thermoplastiques sont plus flexibles que les matériaux polymère thermodurcissables. Aussi, le choix des matériaux polymère est conditionné au rayon de courbure que l'on souhaite donner aux bandes de maintien 28".

Il est prévu deux modes distincts de pose de la bande de maintien 28 autour de la surface d'appui cylindrique 26 de la nappe de fils d'armure 24.

Le premier mode de pose comprend le préchauffage de la matrice en matériau polymère 34 au-delà de sa température de ramollissement. Ainsi, lorsqu'on enroule la bande de maintien 28 autour de la surface d'appui cylindrique 26 par application d'une tension élevée, les contraintes résiduelles à l'intérieur de la structure de la bande sont réduites. Ce premier mode s'applique notamment aux bandes de maintien comprenant une matrice en polymère 34 thermoplastique.

Le second mode de pose comprend l'enroulement de la bande de maintien 28 autour de la surface d'appui cylindrique 26 par application d'une tension faible. De la sorte, on limite la diminution de capacité des bandes de la présente invention. Ce second mode s'applique notamment aux bandes de maintien comprenant des fibres agencées sous la forme d'un matériau tissé tel que décrit ci-avant.

## Revendications

1. Conduite tubulaire flexible (10) destinée au transport des hydrocarbures comprenant, d'une part une structure tubulaire interne de pression comportant une gaine tubulaire étanche (16) et une voûte de pression (18) réalisée autour de ladite gaine tubulaire étanche (16) pour reprendre les efforts radiaux, et d'autre part une structure tubulaire externe de traction comportant au moins une nappe de fils d'armure de traction (22, 24) en appui sur ladite voûte de pression (18), et au moins une bande de maintien (28) enroulée en hélice sur ladite nappe de fils d'armure de traction (24), ladite bande de maintien (28) comportant une couche en matériau polymère (34) et une pluralité de mèches de fibres (36) étendues sensiblement selon la direction longitudinale de ladite bande de maintien (28), les fibres des mèches de ladite pluralité de mèches de fibres (36) étant des fibres minérales, et ladite pluralité de mèches de fibres étant noyée à l'intérieur de ladite couche en matériau polymère (34) ;
**caractérisée en ce que** ladite au moins une bande de maintien (28) est enroulée en hélice à pas court en formant des spires jointives pour pouvoir maintenir radialement lesdits fils d'armure de traction (24) contre ladite voûte de pression (18).

2. Conduite tubulaire flexible selon la revendication 1, **caractérisée en ce que** lesdites fibres minérales sont des fibres de basalte.

3. Conduite tubulaire flexible selon la revendication 1 ou 2, **caractérisée en ce que** les mèches de ladite pluralité de mèches de fibres (36) sont toronnées.

4. Conduite tubulaire flexible selon la revendication 1 ou 2, **caractérisée en ce que** les mèches de ladite pluralité de mèches de fibres (36) sont tressées.

5. Conduite tubulaire flexible selon l'une quelconque des revendications 1 à 4, **caractérisée en ce que** les mèches de fibres de ladite pluralité de mèches de fibres (36) sont réparties uniformément à l'intérieur de ladite couche en matériau polymère.

6. Conduite tubulaire flexible selon l'une quelconque des revendications 1 à 4, **caractérisée en ce que** ladite couche en matériau polymère (34) présentant une épaisseur et une surface médiane divisant ladite couche en matériau polymère suivant l'épaisseur en deux parties identiques, et **en ce que** les mèches de fibres de ladite pluralité de mèches de fibres (36) s'étendent à l'intérieur de l'une desdites deux parties.

7. Conduite tubulaire flexible selon l'une quelconque des revendications 1 à 6, **caractérisée en ce que** les mèches de fibres de ladite pluralité de mèches de fibres (36) sont encapsulées dans un autre matériau polymère.

8. Conduite tubulaire flexible selon la revendication 7, **caractérisée en ce que** ledit autre matériau polymère est un matériau thermoplastique.

9. Conduite tubulaire flexible selon la revendication 7, **caractérisée en ce que** ledit autre matériau polymère est un matériau thermodurcissable.

10. Conduite tubulaire flexible selon l'une quelconque des revendications 1 à 9, **caractérisée en ce que** ledit matériau polymère de ladite une couche en matériau polymère (34) est un thermoplastique.

11. Conduite tubulaire flexible selon l'une quelconque des revendications 1 à 9, **caractérisée en ce que** ledit matériau polymère de ladite une couche en matériau polymère (34) est thermodurcissable.

## Patentansprüche

1. Flexible Rohrleitung (10), die für den Transport von Kohlenwasserstoffen bestimmt ist, umfassend zum einen eine interne rohrförmige Druckstruktur, die einen dichten rohrförmigen Mantel (16) und ein Druckgewölbe (18) aufweist, das um den dichten rohrförmigen Mantel (16) realisiert ist, um die radialen Kräfte aufzunehmen, und zum anderen eine externe rohrförmige Zugstruktur, die mindestens eine Lage aus Zugbewehrungsfäden (22, 24) aufweist, die sich auf dem Druckgewölbe (18) abstützen, und mindestens einen Haltestreifen (28), der schraubenförmig über die Lage aus Zugbewehrungsfäden (24) gewickelt ist, wobei der Haltestreifen (28) eine Schicht aus Polymermaterial (34) und eine Vielzahl von Faserbändern (36) aufweist, die etwa gemäß der Längsrichtung des Haltestreifens (28) ausgebreitet sind, wobei die Fasern der Bänder der Vielzahl von Faserbändern (36) Mineralfasern sind und die Vielzahl von Faserbändern in die Schicht aus Polymermaterial (34) eingelassen ist;
**dadurch gekennzeichnet, dass** der mindestens eine Haltestreifen (28) mit kurzer Steigung schraubenförmig gewickelt ist und dabei fugendichte Windungen bildet, um die Zugbewehrungsfäden (24) radial auf dem Druckgewölbe (18) halten zu können.

2. Flexible Rohrleitung nach Anspruch 1, **dadurch gekennzeichnet, dass** die Mineralfasern Basaltfasern sind.

3. Flexible Rohrleitung nach Anspruch 1 oder 2, **dadurch gekennzeichnet, dass** die Bänder der Vielzahl von Faserbändern (36) verseilt sind.

4. Flexible Rohrleitung nach Anspruch 1 oder 2, **dadurch gekennzeichnet, dass** die Bänder der Vielzahl von Faserbändern (36) geflochten sind.

5. Flexible Rohrleitung nach einem der Ansprüche 1 bis 4, **dadurch gekennzeichnet, dass** die Faserbänder von der Vielzahl von Faserbändern (36) gleichmäßig im Inneren der Schicht aus Polymermaterial verteilt sind.

6. Flexible Rohrleitung nach einem der Ansprüche 1 bis 4, **dadurch gekennzeichnet, dass** die Schicht aus Polymermaterial (34) eine Dicke aufweist und eine mittlere Oberfläche, die die Schicht aus Polymermaterial gemäß der Dicke in zwei identische Teile teilt und dass sich die Faserbänder von der Vielzahl von Faserbändern (36) im Inneren von einem der zwei Teile erstrecken.

7. Flexible Rohrleitung nach einem der Ansprüche 1 bis 6, **dadurch gekennzeichnet, dass** die Faserbänder von der Vielzahl von Faserbändern (36) in einem anderen Polymermaterial eingekapselt sind.

8. Flexible Rohrleitung nach Anspruch 7, **dadurch gekennzeichnet, dass** das andere Polymermaterial ein thermoplastisches Material ist.

9. Flexible Rohrleitung nach Anspruch 7, **dadurch gekennzeichnet, dass** das andere Polymermaterial ein wärmehärtbares Material ist.

10. Flexible Rohrleitung nach einem der Ansprüche 1 bis 9, **dadurch gekennzeichnet, dass** das Polymermaterial der einen Schicht aus Polymermaterial (34) ein Thermoplast ist.

11. Flexible Rohrleitung nach einem der Ansprüche 1 bis 9, **dadurch gekennzeichnet, dass** das Polymermaterial der einen Schicht aus Polymermaterial (34) wärmehärtbar ist.

## Claims

1. A flexible tubular pipe (10) designed for the transport of hydrocarbons comprising, on the one hand, a tubular inner pressure structure comprising a tubular sealing sheath (16) and a pressure vault (18) realized around said tubular sealing sheath (16) to take up the radial stresses, and on the other hand a tubular outer tensile structure comprising at least one web of tensile armor wires (22, 24) bearing against said pressure vault (18), and at least one holding strip (28) wound in helix around said web of tensile armor wires (24), said holding strip (28) comprising a layer of polymer material (34) and a plurality of strands of fibers (36) stretched substantially in the longitudinal direction of said holding strip (28), the fibers of the strands of said plurality of strands of fibers (36) being mineral fibers, and said plurality of strands of fibers being embedded inside said layer of polymer material (34) ;
**characterized in that** said at least one holding strip (28) is wound in a short-pitch helix forming adjoining turns in order to hold said tensile armor wires (24) radially against said pressure vault (18).

2. The flexible tubular pipe as claimed in claim 1, **characterized in that** said mineral fibers are basalt fibers.

3. The flexible tubular pipe as claimed in claim 1 or 2, **characterized in that** the strands of said plurality of fiber strands (36) are stranded.

4. The flexible tubular pipe as claimed in claim 1 or 2, **characterized in that** the strands of said plurality of fiber strands (36) are braided.

5. The flexible tubular pipe as claimed in any one of claims 1 to 4, **characterized in that** the fiber strands of said plurality of fiber strands (36) are distributed uniformly within said layer of polymer material.

6. The flexible tubular pipe as claimed in any one of claims 1 to 4, **characterized in that** said layer of polymer material (34) has a thickness and a median surface dividing said layer of polymer material in terms of its thickness into two identical portions, and **in that** the fiber strands of said plurality of fiber strands (36) extend within one of said two portions.

7. The flexible tubular pipe as claimed in any one of claims 1 to 6, **characterized in that** the fiber strands of said plurality of fiber strands (36) are encapsulated in another polymer material.

8. The flexible tubular pipe as claimed in claim 7, **characterized in that** said other polymer material is a thermoplastic material.

9. The flexible tubular pipe as claimed in claim 7, **characterized in that** said other polymer material is a thermosetting material.

10. The flexible tubular pipe as claimed in any one of claims 1 to 9, **characterized in that** said polymer material of said one layer of polymer material (34) is a thermoplastic.

11. The flexible tubular pipe as claimed in any one of claims 1 to 9, **characterized in that** said polymer material of said one layer of polymer material (34) is thermosetting.
